# EUROPEAN PATENT SPECIFICATION

(11) **EP 4 096 274 B1**
(45) Date of publication and mention of the grant of the patent: **08.04.2026**
(21) Application number: 20916174.4
(22) Date of filing: 16.12.2020
(51) Int. Cl.: H04W 76/34, H04W 24/02, H04W 76/15, H04W 76/27

(54) **METHOD FOR PROCESSING CONFIGURATION INFORMATION OF BEARER, AND NETWORK DEVICE AND TERMINAL**
VERFAHREN ZUR VERARBEITUNG VON KONFIGURATIONSINFORMATIONEN EINES TRÄGERS SOWIE NETZWERKVORRICHTUNG UND ENDGERÄT
PROCÉDÉ DE TRAITEMENT D'INFORMATIONS DE CONFIGURATION D'UNE PORTEUSE, DISPOSITIF RÉSEAU ET TERMINAL

(30) Priority: 21.01.2020 CN 202010070189
(43) Date of publication of application: 30.11.2022
(73) Proprietor: Datang Mobile Communications Equipment Co., Ltd., Beijing 100085 (CN)
(72) Inventor: XU, Meng, Beijing 100083 (CN); LIANG, Jing, Beijing 100083 (CN)
(74) Representative: Studio Torta S.p.A.
(86) International application number: PCT/CN2020/136838
(87) International publication number: WO 2021/147574

(56) References cited:
- EP-A1- 3 331 280
- WO-A1-2019/194528
- CN-A- 109 391 959
- US-A1- 2019 182 881
- US-A1- 2019 254 100
- US-A1- 2019 356 536
- QUALCOMM INCORPORATED: "UL path switch upon SCG failure", 3GPP DRAFT; R2-1713640 UL PATH SWITCH UPON SCG FAILURE, vol. RAN WG2, 17 November 2017 (2017-11-17), Reno, USA, pages 1 - 1, XP051372307

## Description

### TECHNICAL FIELD

The present disclosure relates to the field of communications technologies, and in particular, to a processing method of configuration information of bearer, a processing equipment of configuration information of bearer and a processor-readable storage medium.

### BACKGROUND

In order to increase the data transmission rate, the network may configure a SCG (Secondary Cell Group) for the UE (User Equipment or terminal) to perform load sharing, thereby increasing the data transmission rate of the UE. After the network configures the SCG for the UE, the UE may access an SN (Secondary Node) on a PSCell (Primary SCG Cell), which is a SpCell (Special Cell) of the SCG. The network may configure bearer transport for the UE at the SCG. The UE maintains the configuration information of both MCG (Master Cell Group) and SCG.

In Release 17, the 5G NR system is expected to support SCG suspend (suspend) or SCG dormant state (downlink) or PSCell suspend or dormant state, and is intended to suspend or configure an SCG/PSCell to enter a dormant state when there is no large packet transmission for an infrequent large data stream, and the UE and the network side stores the context of the SCG but suspend some behaviors, such as stopping monitoring a PDCCH (Physical downlink control channel) on the SCG side, etc., stopping data transmission on the SCG side, storing power consumption of the UE, and quickly activating the SCG of the UE for data transmission when there is a large data stream interaction.

The network may configure bearers of different forms for the UE, may configure an MCG terminating bearer and an SCG terminating bearer according to a position of a PDCP (Packet Data Convergence Protocol), and may configure an MCG RLC bearer, an SCG RLC bearer and a split bearer according to a position of an RLC (Radio Link Control) bearer.

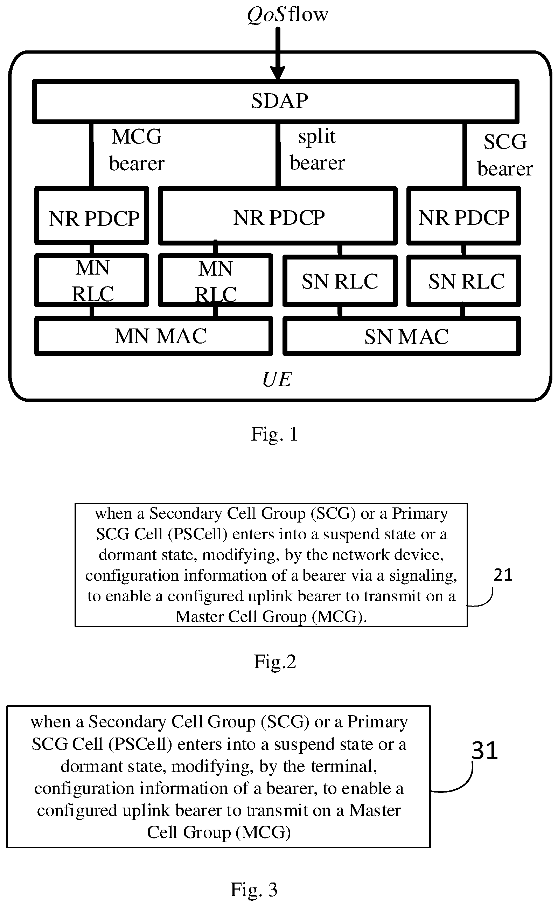

As shown in FIG. 1, split bearers, that is, the network configures an RLC bearer transmitted in a MN (Master Node) and an RLC bearer transmitted in an SN for the bearer, respectively, and the network configures a designated branch for the bearer as a primary path. When the split bearer is configured with duplication transmission and activated, the UE needs to transmit the same PDCP data packet at both MN and SN. If the duplication transmission or the duplication de-transmission activated state is not configured, the UE determines a transmission path of the data according to the configured uplink data split threshold, when the buffer memory of the data to be transmitted is smaller than the configured threshold, the UE only transmits the data to be transmitted on the primary path, and when the buffer memory of the data to be transmitted is larger than the configured threshold, the UE can select to transmit the data on any branch. For PDCP control PDU (Protocol Data Unit), it can be transmitted only on the primary path. The network may configure a split Bearer for a DRB (Data Radio Bearer) or an SRB (signaling Radio Bearer).

For downlink data, when the network configures split bearer for the UE, the network side can determine whether to transmit the downlink data on the MN side or the SN side according to the state of the SCG; for non-split bearers, the network side may determine whether to activate SCG or PSCell status or reconfigure bearer types, but when the SCG or PSCell is configured in a dormant state or suspend state, how the network ensures that the UE can normally perform uplink data transmission when there is uplink data to be transmitted remains to be solved.

International PCT Application published with no. WO2019/194528A1 discloses a method for performing, by a user equipment (UE), transmission via only a primary path in a wireless communication system, and an apparatus supporting the same. The method may include: configuring a split bearer, which has multiple L2 entities for both a master cell group (MCG) and a secondary cell group (SCG); when the UE transits from a first state to a second state, reconfiguring the primary path of the split bearer autonomously; and performing the transmission via only the primary path of the split bearer, wherein the primary path is related to an L2 entity for the MCG.

### SUMMARY

The invention is set out in the appended set of claims.

According to the embodiment of the disclosure, when the SCG or PSCell is in a suspend state or a dormant state, the SN side cannot perform a data scheduling, and the network side ensures that uplink data of the terminal can be transmitted on the MCG when the SCG is in a suspend state or a dormant state, by a signaling configuration or the UE automatically modifying related configuration of the split bearer, such as the primary path, the duplication transmission function, and the uplink data split threshold.

### BRIEF DESCRIPTION OF THE DRAWINGS

FIG. 1 is a schematic diagram of a network architecture in which a network configures bearers of different types for a UE;
FIG. 2 is a schematic flowchart of a processing method of configuration information of a bearer on a network side according to an embodiment of the present disclosure;
FIG. 3 is a schematic flowchart of a processing method of configuration information of a bearer on a terminal side according to an embodiment of the disclosure;
FIG. 4 is an architecture diagram of a network device according to an embodiment of the disclosure;
FIG. 5 is a block diagram of a processing equipment of configuration information of a bearer at a network side according to an embodiment of the disclosure;
FIG. 6 is an architecture diagram of a terminal according to an embodiment of the disclosure; and
FIG. 7 is a block diagram of a processing equipment of configuration information of a bearer at a terminal side according to an embodiment of the disclosure.

### DETAILED DESCRIPTION

Exemplary embodiments of the present disclosure will be described in more detail below with reference to the accompanying drawings. While exemplary embodiments of the present disclosure are shown in the drawings, it should be understood that the present disclosure may be embodied in various forms and should not be limited by the embodiments set forth herein. Rather, these embodiments are provided so that this disclosure will be thorough and complete, and will fully convey the scope of the disclosure to those skilled in the art.

As shown in FIG. 2, a processing method of configuration information of bearer, applied to a network device is provided in an embodiment of the present disclosure, which is applied to a network device, and the method includes:
Step 21: when a Secondary Cell Group (SCG) or a Primary SCG Cell (PSCell) enters into a suspend state or a dormant state, modifying, by the network device, configuration information of a bearer via a signaling, to enable a configured uplink bearer to transmit on a Master Cell Group (MCG).

In this embodiment of the present disclosure, when the SCG or PSCell is suspended or in a dormant state, the SN side cannot perform data scheduling, and the network side modifies the relevant configuration of the bearer via the signaling configuration, for example, the primary path of the separation bearer, the duplication transmission function, and the uplink data split threshold, so as to ensure that the configured uplink bearer can be transmitted in the MCG when the SCG/PSCell is suspended or enters into the dormant state.

Optionally, the modifying by the network device the configuration information of the bearer via the signaling includes at least one of:
the network device reconfiguring or releasing an SCG Radio Link Control (RLC) bearer via the signaling, to make to a terminal to have no SCG RLC bearer supporting uplink transmission;
the network device deactivating a split bearer or de-configuring a duplication transmission function of the split bearer, via the signaling;
the network device setting a primary path of the split bearer to be the MCG, via the signaling; or
the network device setting an uplink data split threshold of the split bearer to be infinity, via the signaling.

Optionally, the reconfiguring or releasing by the network device the SCG RLC bearer via the signaling includes at least one of:
the network device releasing the SCG RLC bearer, via the signaling;
the network device reconfiguring the SCG RLC bearer to be an MCG RLC bearer, via the signaling;
the network device releasing the SCG RLC bearer supporting uplink transmission, via the signaling;
the network device reconfiguring the SCG RLC bearer supporting uplink transmission to be an MCG RLC bearer, via the signaling; or
the network device reconfiguring the SCG RLC bearer supporting uplink transmission to be only supporting downlink transmission, via the signaling.

Optionally, the method further include:
Step 22: when the SCG or the PSCell enters into an activated state, the network device reconfiguring a configuration parameter of a split bearer, via the signaling.

Further, the modified bearer configuration information or the split bearer reconfigured configuration parameter may be notified or the terminal via a signaling, or may not be notified, and the terminal transmits the modified bearer configuration information or the split bearer configuration parameter on the bearer capable of transmitting the uplink data.

The following describes the implementation process of the above embodiment with reference to specific examples:
example 1: when the network configuration SCG or PSCell enters into a suspend state or a dormant state, the network modifies the bearer configuration through detailed signaling configuration to ensure that the UE can normally upload uplink data, which may specifically include:
   Step 1: the network configures an SCG RLC bearer for the UE, which may include the following types of SCG RLC bearers:
      RLC bearer for bidirectional transmission, that is, uplink data and downlink data can be sent;
      RLC bearers which can only send downlink data;
      RLC bearers which can only send uplink data.
   Step 2: when the uplink data is carried, the UE uploads the data on the corresponding SCG RLC bearer.
   Step 3: the network configures the SCG/PSCell into a dormant state or a suspension state, and in order to ensure normal uplink data transmission of the UE, the network side reconfiguring or releasing an SCG RLC bearer includes at least one of the following modes:
      releasing SCG RLC bearer;
      reconfiguring SCG RLC bearer to be an MCG RLC bearer;
      releasing SCG RLC bearer capable of only sending uplink data and/or SCG RLC bearer capable of bidirectional transmission;
      reconfiguring SCG RLC bearer only capable of sending uplink data and/or SCG RLC bearer capable of bidirectional transmission into MCG RLC bearer; or
      the SCG RLC bearer for the bidirectional transmission is reconfigured into be the SCG RLC bearer which can only send downlink data.
   Step 4: the UE enters the SCG/PSCell dormant state or the suspension state, the load is reconfigured according to the network configuration signaling, the UE only requests for scheduling at the MCG side, monitors the scheduling information of the MCG and uploads uplink data at the MCG.
Example 2: the network ensures that the UE can upload uplink data normally by modifying the split bearer configuration through the detailed signaling configuration, which specifically includes:
   Step 1: the network configures a split bearer for the UE, where the bearer may include the following configurations:
      configuring a duplicate (duplicate) transmission function and activating the duplication transmission function;
      the primary path is SCG;
      the uplink data split threshold is a specified non-infinite value.
   Step 2: if the uplink data is uploaded, the UE:
      if the duplication transmission function is activated, respectively uploading the same PDCP data packets on the MN RLC bearer and the SN RLC bearer configured by the bearer.
      If the primary path is SCG, when the duplication transmission function is not configured or deactivated, when the DRB has uplink data arriving and the DRB buffer is smaller than the uplink data split threshold, transmitting the uplink data on the SCG; when the DRB has uplink data arriving and the DRB buffer is greater than the uplink data split threshold, the UE may select to transmit the uplink data on the SCG or the MCG;
      if the primary path is MCG, when the retransmission function is not configured or deactivated, and when the DRB has uplink data arriving and the DRB buffer is greater than the uplink data split threshold, the UE may select to transmit the uplink data on SCG or MCG;
      if the primary path is SCG, the UE transmits PDCP control PDU on SCG side.
   Step 3: the network configures the SCG/PSCell to enter a dormant state or suspend, and in order to ensure normal uplink data transmission of the UE, the network side reconfigures a split bearer, where the configuration information may be sent to the UE along with a signaling notifying the UE that the SCG enters the dormant state or configured to the UE before the network instructs the SCG of the UE to enter the dormant state, so as to ensure that the UE does not have a split bearer to be uploaded on the SCG side when entering the dormant state, and the specific configuration includes at least one of:
      the network reconfigures the split bearer as a non-split bearer, for example, releases the SN RLC bearer;
      the network deactivates or de-configures the duplication transmission function of the bearer;
      reconfiguring the primary path to be MCG; or
      the reconfiguration uplink data split threshold is infinite.
   Step 4: the UE enters the SCG/PSCell dormant state or the suspension state, and reconfigures the separated bearer according to the network configuration, when the bearer carries out data transmission, the UE only requests scheduling at the MCG side, monitors the scheduling information of the MCG and uploads the data at the MCG.

In the above embodiments of the present disclosure, when the SCG/PSCell is suspended or enters the dormant state, the network side reconfigures the relevant configuration of the bearer via the signaling, for example, the primary path of the separation bearer, the duplication transmission function, and the uplink data split threshold, etc., so as to ensure that the uplink data of the UE can be transmitted in the MCG when the SCG/PSCell is suspended or enters the dormant state. When the SCG is activated, the network reconfigures the configuration of the load via the signaling or the UE automatically recovers and separates the original configuration information of the load before the SCG/PSCell is suspended or enters the dormant state. Therefore, when the network configuration SCG/PSCell is suspended or enters a dormant state, the uplink data of the UE can be normally sent, namely sent on the MCG side.

As shown in FIG. 3, A processing method of configuration information of bearer is provided in an embodiment of the present disclosure, where the method is applied to a terminal, and the method includes:
Step 31: when a Secondary Cell Group (SCG) or a Primary SCG Cell (PSCell) enters into a suspend state or a dormant state, modifying, by the terminal, configuration information of a bearer, to enable a configured uplink bearer to transmit on a Master Cell Group (MCG).

Optionally, the modifying by the terminal the configuration information of the bearer includes at least one of:
the terminal releasing an SCG Radio Link Control (RLC) bearer;
the terminal storing current SCG RLC bearer configuration information and suspending an SCG RLC bearer;
the terminal storing configuration information of a current split bearer;
the terminal deactivating a split bearer or de-configuring a duplication transmission function of the split bearer;
the terminal setting a primary path of the split bearer to be the MCG; or
the terminal setting an uplink data split threshold of the split bearer to be infinity.

Optionally, the method for processing the configuration information of bearer may further include:
Step 32: when the SCG or the PSCell enters into an activated state, the terminal recovering a configuration parameter of the split bearer, the configuration parameter being a configuration parameter when the SCG or the PSCell enters into the suspend state or the dormant state and configured by the network; or when the SCG or the PSCell enters into an activated state, the terminal recovering a suspended SCG RLC bearer; or when the SCG or the PSCell enters into an activated state, the terminal maintaining a configuration parameter of the bearer when the SCG or the PSCell enters into a suspend state or a dormant state.

Further, the terminal may also receive configuration information after bearer modification or configuration parameters after bearer reconfiguration notified by the network device via the signaling, and the terminal performs corresponding transmission according to the parameters.

The following describes the implementation process of the above embodiment with reference to specific examples:
embodiment 3, the automatically modifying, by the UE, the relevant configuration of the separated bearer may specifically include:
Step 1: the network configures a split bearer for the UE, where the bearer may include the following configurations:
   configuring a duplication transmission function and activating the duplication transmission function;
   the primary path is configured as SCG;
   the uplink data split threshold is a specified non-infinite value.
Step 2: if the uplink data is uploaded, the UE:
   if the duplication transmission function is activated, respectively uploading the same PDCP data packets on the MN RLC bearer and the SN RLC bearer configured by the bearer.
   If the primary path is SCG, when the duplication transmission function is not configured or deactivated, when the DRB has uplink data arriving and the DRB buffer is smaller than the uplink data split threshold, transmitting the uplink data on the SCG; when the DRB has uplink data arriving and the DRB buffer is greater than the uplink data split threshold, the UE may select to transmit the uplink data on the SCG or the MCG;
   if the primary path is MCG, when the retransmission function is not configured or deactivated, and when the DRB has uplink data arriving and the DRB buffer is greater than the uplink data split threshold, the UE may select to transmit the uplink data on SCG or MCG;
   if the primary path is SCG, the UE transmits PDCP control PDU on SCG side.
Step 3: the network enters the SCG/PSCell configuration into a dormant state or a suspend state.
Step 4: the UE enters an SCG/PSCell dormant state or a suspension state, automatically reconfigures a separation bearer or stores the configuration information of the current separation bearer and reconfigures the bearer, and the UE reconfigures the bearer according to one or more of the following items:
   reconfiguring the split bearer to be a non-split bearer, e.g., releasing an SN RLC bearer; suspending the SN RLC bearer of the bearing, namely storing the configuration information of the SN RLC bearer, but not activating the RLC bearer;
   deactivating or de-configuring the duplication transmission function of the bearer; reconfiguring the primary path to be MCG;
   the reconfiguration uplink data split threshold is infinite.
Step 5: when the data transmission is carried, the UE only requests scheduling at the MCG side, monitors the scheduling information of the MCG and uploads the data at the MCG.

Example 4: when the network configuration SCG or PSCell enters an activated state, the UE automatically restores the split bearer configuration information, which may specifically include:
Step 1: the network configures a split bearer for the UE, where the bearer may include the following configurations:
   configuring a duplication transmission function and activating the duplication transmission function;
   the primary path is configured as SCG;
   the uplink data split threshold is a specified non-infinite value.
Step 2: the network informs the UE to enter SCG/PSCell configuration into dormant state or suspend state.
Step 3: the UE enters an SCG/PSCell dormant state or a suspension state, the configuration information of the current separated bearer is stored, the bearer is automatically reconfigured, and the UE reconfigures the bearer according to one or more of the following items:
   reconfiguring the split bearer to be a non-split bearer, e.g., releasing an SN RLC bearer;
   suspending the SN RLC bearer of the bearing, namely storing the configuration information of the SN RLC bearer, but not activating the RLC bearer;
   deactivating or de-configuring the duplication transmission function of the bearer; reconfiguring the primary path to be MCG;
   the reconfiguration uplink data split threshold is infinite.
Step 4: the network informs the UE to enter the SCG/PSCell configuration into an activated state.
Step 5: the UE restores the configuration information of the bearer to the configuration information of the bearer before the UE enters the SCG/PSCell dormant state or is suspended, that is, the configuration information of the bearer stored by the UE in step 3.

Example 5: the method for reconfiguring the detailed network signaling to separate the bearer configuration information specifically includes the following steps:
Step 1: the network configures a split bearer for the UE, where the bearer may include the following configurations:
   configuring a duplication transmission function and activating the duplication transmission function;
   the primary path is configured as SCG;
   the uplink data split threshold is a specified non-infinite value.
Step 2: the network informs the UE to enter SCG/PSCell configuration into dormant state or suspend state.
Step 3: the UE enters an SCG/PSCell dormant state or a suspend state, the UE automatically reconfigures the bearer, and the UE reconfigures the bearer according to one or more of the following items:
   reconfiguring the split bearer to be a non-split bearer, e.g., releasing an SN RLC bearer;
   suspending the SN RLC bearer of the bearing, namely storing the configuration information of the SN RLC bearer, but not activating the RLC bearer;
   deactivating or de-configuring the duplication transmission function of the bearer; reconfiguring the primary path to be MCG;
   the reconfiguration uplink data split threshold is infinite.
Step 4a: the network informs the UE to enter the SCG configuration into an activated state, and the network reconfigures the separated bearer through a detailed signaling; which may include at least one of the following configurations: and separating the loaded primary path, separating the uplink data by a threshold, and activating and deactivating the duplication transmission function.
Step 5a: the UE reconfigures the separated bearer according to the configuration information of the bearer configured by the network;
Step 4b: the network informs the UE to enter the SCG configuration into an activated state, and the network does not reconfigure the separated bearer through detailed signaling;
Step 5b: the UE maintains the configuration information of the bearer when the SCG enters the dormant state.

The above embodiments of the present disclosure may implement that when the network configures the SCG or the PSCell to suspend or enter the dormant state, the uplink data of the UE may be normally sent, that is, sent on the MCG side.

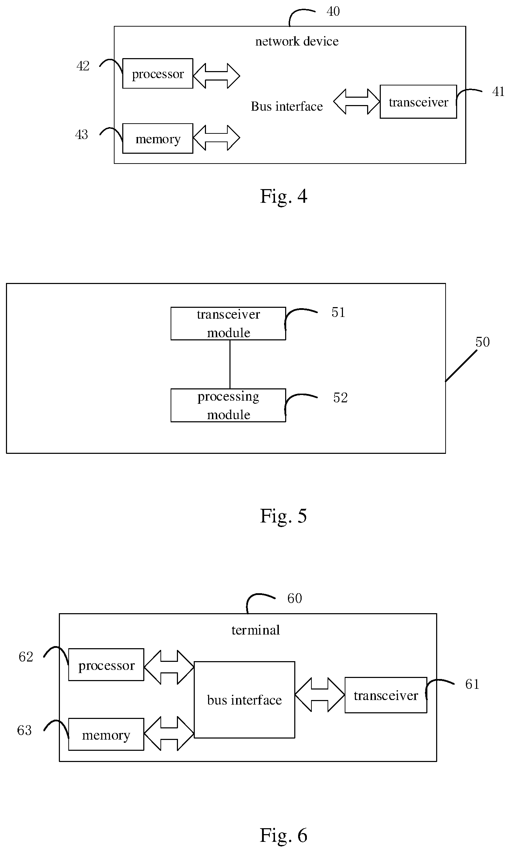

As shown in FIG. 4, an embodiment of the present disclosure further provides a network device 40, including: a transceiver 41, a processor 42, and a memory 43, where the memory 43 stores a program executable by the processor 42; the processor 42, when executing the program, implements: when a Secondary Cell Group (SCG) or a Primary SCG Cell (PSCell) enters into a suspend state or a dormant state, modifying configuration information of a bearer via a signaling, to enable a configured uplink bearer to transmit on a Master Cell Group (MCG).

Optionally, the modifying the configuration information of the bearer via the signaling includes at least one of:
reconfiguring or releasing an SCG Radio Link Control (RLC) bearer via the signaling, to make to a terminal to have no SCG RLC bearer supporting uplink transmission;
deactivating a split bearer or de-configuring a duplication transmission function of the split bearer, via the signaling;
setting a primary path of the split bearer to be the MCG, via the signaling; or
setting an uplink data split threshold of the split bearer to be infinity, via the signaling.

Optionally, the SCG radio link control RLC bearer is reconfigured or released via the signaling, and the method includes at least one of the following steps:
releasing the SCG RLC bearer, via the signaling;
reconfiguring the SCG RLC bearer to be an MCG RLC bearer, via the signaling;
releasing the SCG RLC bearer supporting uplink transmission, via the signaling;
reconfiguring the SCG RLC bearer supporting uplink transmission to be an MCG RLC bearer, via the signaling; or
reconfiguring the SCG RLC bearer supporting uplink transmission to be only supporting downlink transmission, via the signaling.

Optionally, the processor 42 is further configured to, when the SCG or the PSCell enters into an activated state, reconfigure a configuration parameter of a split bearer, via the signaling.

It should be noted that the network device in this embodiment is a network device corresponding to the method shown in FIG. 2, and the implementation manners in the foregoing embodiments are all applied to the embodiment of the network device, and the same technical effects can also be achieved. In the network device, the transceiver 41 and the memory 43, and the transceiver 41 and the processor 42 may be communicatively connected through a bus interface, and the function of the processor 42 may also be implemented by the transceiver 41, and the function of the transceiver 41 may also be implemented by the processor 42. It should be noted that the network device provided in the embodiment of the present disclosure can implement all the method steps implemented by the method embodiment and can achieve the same technical effects, and detailed descriptions of the same parts and beneficial effects as those of the method embodiment in this embodiment are omitted here.

As shown in FIG. 5, an embodiment of the present disclosure further provides an apparatus 50 for processing configuration information of bearer, which is applied to a network device, where the apparatus 50 includes:
a processing module 52, configured to, when a Secondary Cell Group (SCG) or a Primary SCG Cell (PSCell) enters into a suspend state or a dormant state, modify configuration information of a bearer via a signaling, to enable a configured uplink bearer to transmit on a Master Cell Group (MCG).

Optionally, the configuration information of the bearer is modified via the signaling, and the configuration information includes at least one of the following:
reconfiguring or releasing an SCG Radio Link Control (RLC) bearer via the signaling, to make to a terminal to have no SCG RLC bearer supporting uplink transmission;
deactivating a split bearer or de-configuring a duplication transmission function of the split bearer, via the signaling;
setting a primary path of the split bearer to be the MCG, via the signaling; or
setting an uplink data split threshold of the split bearer to be infinity, via the signaling.

Optionally, reconfiguring or releasing an SCG radio link control, RLC, bearer by signaling includes at least one of:
releasing the SCG RLC bearer, via the signaling;
reconfiguring the SCG RLC bearer to be an MCG RLC bearer, via the signaling;
releasing the SCG RLC bearer supporting uplink transmission, via the signaling;
reconfiguring the SCG RLC bearer supporting uplink transmission to be an MCG RLC bearer, via the signaling; or
reconfiguring the SCG RLC bearer supporting uplink transmission to be only supporting downlink transmission, via the signaling.

Optionally, the processing module 52 is further configured to when the SCG or the PSCell enters into an activated state, reconfigure a configuration parameter of a split bearer, via the signaling.

It should be noted that the apparatus in this embodiment is an apparatus corresponding to the method shown in FIG. 3, and the implementation manners in the above embodiments are all applied to the embodiment of the apparatus, and the same technical effects can be achieved. The apparatus may further include a transceiver module 51, where the transceiver module 51 is configured to transmit information processed by the processing module 52, and the like. It should be noted that the apparatus provided in the embodiment of the present disclosure can implement all the method steps implemented by the method embodiment, and can achieve the same technical effects, and detailed descriptions of the same parts and beneficial effects as the method embodiment in this embodiment are not repeated herein.

As shown in FIG. 6, an embodiment of the present disclosure further provides a terminal 60, including: a transceiver 61, a processor 62, and a memory 63, where the memory 63 stores a program executable by the processor 62; the processor 62, when executing the program, implements: when a Secondary Cell Group (SCG) or a Primary SCG Cell (PSCell) enters into a suspend state or a dormant state, modifying configuration information of a bearer, to enable a configured uplink bearer to transmit on a Master Cell Group (MCG).

Optionally, the modifying the configuration information of the bearer includes at least one of: he modifying the configuration information of the bearer includes at least one of: releasing an SCG Radio Link Control (RLC) bearer; storing current SCG RLC bearer configuration information and suspending an SCG RLC bearer; storing configuration information of a current split bearer; deactivating a split bearer or de-configuring a duplication transmission function of the split bearer; setting a primary path of the split bearer to be the MCG; or setting an uplink data split threshold of the split bearer to be infinity.

Optionally, the processor is further configured to, when the SCG or the PSCell enters into an activated state, recover a configuration parameter of the split bearer, the configuration parameter being a configuration parameter when the SCG or the PSCell enters into the suspend state or the dormant state and configured by the network; or when the SCG or the PSCell enters into an activated state, recover a suspended SCG RLC bearer; or when the SCG or the PSCell enters into an activated state, maintain a configuration parameter of the bearer when the SCG or the PSCell enters into a suspend state or a dormant state.

It should be noted that the terminal 60 in this embodiment is a terminal corresponding to the method shown in FIG. 3, and the implementation manners in the above embodiments are all applied to the embodiment of the terminal, and the same technical effects can be achieved. In the terminal, the transceiver 61 and the memory 63, and the transceiver 61 and the processor 62 may be communicatively connected through a bus interface, and the functions of the processor 62 may also be implemented by the transceiver 61, and the functions of the transceiver 61 may also be implemented by the processor 62. It should be noted that, the terminal provided in the embodiment of the present disclosure can implement all the method steps implemented by the method embodiment, and can achieve the same technical effect, and detailed descriptions of the same parts and beneficial effects as those of the method embodiment in this embodiment are not repeated herein.

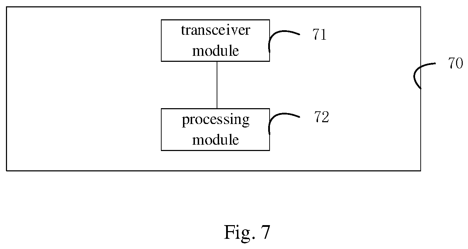

As shown in FIG. 7, an embodiment of the present disclosure further provides an apparatus 70 for processing configuration information of bearer, which is applied to a terminal, where the apparatus 70 includes:
a processing module 72, configured to, when a Secondary Cell Group (SCG) or a Primary SCG Cell (PSCell) enters into a suspend state or a dormant state, modify configuration information of a bearer, to enable a configured uplink bearer to transmit on a Master Cell Group (MCG).

Optionally, the modifying the configuration information of the bearer includes at least one of: releasing an SCG Radio Link Control (RLC) bearer; storing current SCG RLC bearer configuration information and suspending an SCG RLC bearer; storing configuration information of a current split bearer; deactivating a split bearer or de-configuring a duplication transmission function of the split bearer; setting a primary path of the split bearer to be the MCG; or setting an uplink data split threshold of the split bearer to be infinity.

Optionally, the processing module 72 is further configured to, when the SCG or the PSCell enters into an activated state, recover a configuration parameter of the split bearer, the configuration parameter being a configuration parameter when the SCG or the PSCell enters into the suspend state or the dormant state and configured by the network; or when the SCG or the PSCell enters into an activated state, recover a suspended SCG RLC bearer; or when the SCG or the PSCell enters into an activated state, maintain a configuration parameter of the bearer when the SCG or the PSCell enters into a suspend state or a dormant state.

It should be noted that the apparatus in this embodiment is an apparatus corresponding to the method shown in FIG. 3, and the implementation manners in the above embodiments are all applied to the embodiment of the apparatus, and the same technical effects can be achieved. The device may further include a transceiver module 71, and the transceiver module 71 is configured to transmit information processed by the processing module 72, and the like. It should be noted that the apparatus provided in the embodiment of the present disclosure can implement all the method steps implemented by the method embodiment, and can achieve the same technical effects, and detailed descriptions of the same parts and beneficial effects as the method embodiment in this embodiment are not repeated herein.

Embodiments of the present disclosure further provide a processor-readable storage medium storing processor-executable instructions, where the processor-executable instructions are configured to cause the processor to execute the method of FIG. 2 or FIG. 3, and all implementations in the method embodiment described above are applicable to this embodiment, and the same technical effect can be achieved.

Those of ordinary skill in the art will appreciate that the various illustrative elements and algorithm steps described in connection with the embodiments disclosed herein may be implemented as electronic hardware, or combinations of computer software and electronic hardware. Whether such functionality is implemented as hardware or software depends upon the particular application and design constraints imposed on the technical solution. Skilled artisans may implement the described functionality in varying ways for each particular application, but such implementation decisions should not be interpreted as causing a departure from the scope of the present disclosure.

It can be clearly understood by those skilled in the art that, for convenience and simplicity of description, the specific working processes of the above-described systems, apparatuses and units may refer to the corresponding processes in the foregoing method embodiments, and are not described herein again.

In the embodiments provided in the present disclosure, it should be understood that the disclosed apparatus and method may be implemented in other manners. For example, the above-described apparatus embodiments are merely illustrative, and for example, the division of the units is only one type of logical functional division, and other divisions may be realized in practice, for example, multiple units or components may be combined or integrated into another system, or some features may be omitted, or not executed. In addition, the shown or discussed mutual coupling or direct coupling or communication connection may be an indirect coupling or communication connection through some interfaces, devices or units, and may be in an electrical, mechanical or other form.

The units described as separate parts may or may not be physically separate, and parts displayed as units may or may not be physical units, may be located in one position, or may be distributed on multiple network units. Some or all of the units can be selected according to actual needs to achieve the purpose of the solution of the embodiment.

In addition, functional units in the embodiments of the present disclosure may be integrated into one processing unit, or each unit may exist alone physically, or two or more units are integrated into one unit.

The functions may be stored in a computer-readable storage medium if they are implemented in the form of software functional units and sold or used as separate products. Based on such understanding, the technical solutions of the present disclosure, which are in essence or make a contribution to the related art, or portions of the technical solutions, may be embodied in the form of a software product, which is stored in a storage medium and includes several instructions for causing a computer device (which may be a personal computer, a server, or a network device, etc.) to execute all or part of the steps of the methods described in the embodiments of the present disclosure. And the aforementioned storage medium includes: a U disk, a removable hard disk, a ROM, a RAM, a magnetic disk or an optical disk, and various media capable of storing program codes.

Further, it is noted that in the apparatus and method of the present disclosure, it is apparent that each component or each step may be decomposed and/or recombined. Such decomposition and/or recombination should be considered as equivalents of the present disclosure. Also, the steps of performing the series of processes described above may naturally be performed chronologically in the order described, but need not necessarily be performed chronologically, and some steps may be performed in parallel or independently of each other. It will be understood by those of ordinary skill in the art that all or any of the steps or elements of the methods and apparatus of the present disclosure may be implemented in any computing device (including processors, storage media, etc.) or network of computing devices, in hardware, firmware, software, or any combination thereof, which may be implemented by those of ordinary skill in the art using their basic programming skills after reading the description of the present disclosure.

Thus, the objects of the present disclosure may also be achieved by running a program or a set of programs on any computing device. The computing device may be a well-known general purpose device. Thus, the objects of the present disclosure can also be achieved merely by providing a program product containing program code for implementing the method or apparatus. That is, such a program product also constitutes the present disclosure, and a storage medium storing such a program product also constitutes the present disclosure. It is to be understood that such storage media can be any known storage media or any storage media developed in the future. It is also noted that in the apparatus and methods of the present disclosure, it is apparent that the components or steps may be broken down and/or re-combined. Such decomposition and/or recombination should be considered as equivalents of the present disclosure. Also, the steps of executing the series of processes described above may naturally be executed chronologically in the order described, but need not necessarily be executed chronologically. Some steps may be performed in parallel or independently of each other.

It should be noted that the division of each module is only a logical division, and all or part of the actual implementation may be integrated into one physical entity or may be physically separated. And these modules can all be implemented in the form of software invoked by a processing element; or can be implemented in the form of hardware; and part of the modules can be realized in the form of calling software by the processing element, and part of the modules can be realized in the form of hardware. For example, the determining module may be a processing element separately set up, or may be integrated into a chip of the apparatus, or may be stored in a memory of the apparatus in the form of program code, and a processing element of the apparatus calls and executes the function of the determining module. The other modules are implemented similarly. In addition, all or part of the modules can be integrated together or can be independently realized. The processing element described herein may be an integrated circuit having signal processing capabilities. In implementation, each step of the above method or each module above may be implemented by an integrated logic circuit of hardware in a processor element or an instruction in the form of software.

For example, the various modules, units, sub-units or sub-modules may be one or more integrated circuits configured to implement the above methods, such as: one or more Application Specific Integrated Circuits (ASICs), or one or more microprocessors (DSPs), or one or more Field Programmable Gate Arrays (FPGAs), among others. For another example, when some of the above modules are implemented in the form of a Processing element scheduler code, the Processing element may be a general-purpose processor, such as a Central Processing Unit (CPU) or other processor that can call the program code. As another example, these modules may be integrated together and implemented in the form of a system-on-a-chip (SOC).

The terms "first," "second," and the like in the description and in the claims of the present disclosure are used for distinguishing between similar elements and not necessarily for describing a particular sequential or chronological order. It is to be understood that the data so used may be interchanged under appropriate circumstances such that embodiments of the disclosure described herein may be implemented, for example, in sequences other than those illustrated or described herein. Moreover, the terms "includes," "including," and "having," and any variations thereof, are intended to cover a non-exclusive inclusion, such that a process, method, system, article, or apparatus that includes a list of steps or elements is not necessarily limited to those steps or elements expressly listed, but may include other steps or elements not expressly listed or inherent to such process, method, article, or apparatus. Further, the use of "and/or" in the specification and claims means that at least one of the connected objects, such as a and/or B and/or C, means that 7 cases are included that include a alone, B alone, C alone, and both a and B, B and C, a and C, and A, B and C. Similarly, the use of "at least one of A and B" in the specification and claims is to be understood as "A alone, B alone, or both A and B present".

## Claims

1. A processing method of configuration information of bearer, applied to a network device and **characterized by** comprising:
in a case that a Secondary Cell Group, SCG, or a Primary SCG Cell, PSCell, enters into a suspend state or a dormant state, ensuring (21), by the network device, via a signaling, an uplink bearer configured by configuration information of a bearer to transmit on a Master Cell Group, MCG;
wherein the ensuring, by the network device, via the signaling, an uplink bearer configured by configuration information of a bearer to transmit on a MCG comprises at least one of:
the network device reconfiguring or releasing an SCG Radio Link Control, RLC, bearer via the signaling, to make to a terminal to have no SCG RLC bearer supporting uplink transmission;
the network device deactivating a split bearer or de-configuring duplication transmission function of the split bearer, via the signaling;
the network device setting a primary path of a split bearer to be the MCG, via the signaling; and
the network device setting an uplink data split threshold of a split bearer to be infinity, via the signaling.

2. The method according to claim 1, wherein the reconfiguring or releasing by the network device the SCG RLC bearer via the signaling comprises at least one of:
the network device releasing the SCG RLC bearer, via the signaling;
the network device reconfiguring the SCG RLC bearer to be an MCG RLC bearer, via the signaling;
the network device releasing the SCG RLC bearer supporting uplink transmission, via the signaling;
the network device reconfiguring the SCG RLC bearer supporting uplink transmission to be an MCG RLC bearer, via the signaling; and
the network device reconfiguring the SCG RLC bearer supporting uplink transmission to be only supporting downlink transmission, via the signaling.

3. The method according to claim 1, further comprising:
when the SCG or the PSCell enters into an activated state, the network device reconfiguring a configuration parameter of a split bearer, via the signaling.

4. A processing method of configuration information of bearer, applied to a terminal and **characterized by** comprising:
in a case that a Secondary Cell Group, SCG, or a Primary SCG Cell, PSCell, enters into a suspend state or a dormant state, modifying (31), by the terminal, configuration information of a bearer, to ensure a configured uplink bearer to transmit on a Master Cell Group, MCG,
wherein the modifying, by the terminal, the configuration information of the bearer comprises at least one of:
the terminal releasing an SCG Radio Link Control, RLC, bearer;
the terminal storing an SCG RLC bearer configuration information and suspending the SCG RLC bearer;
the terminal storing configuration information of a split bearer;
the terminal deactivating a split bearer or de-configuring duplication transmission function of the split bearer;
the terminal setting a primary path of a split bearer to be the MCG; and
the terminal setting an uplink data split threshold of a split bearer to be infinity.

5. The method according to claim 4, further comprising:
when the SCG or the PSCell enters into an activated state, the terminal recovering a configuration parameter of the split bearer, the configuration parameter being a configuration parameter when the SCG or the PSCell enters into the suspend state or the dormant state and configured by the network; or
when the SCG or the PSCell enters into an activated state, the terminal recovering a suspended SCG RLC bearer; or
when the SCG or the PSCell enters into an activated state, the terminal maintaining a configuration parameter of the bearer when the SCG or the PSCell enters into a suspend state or a dormant state.

6. A processing equipment of configuration information of bearer, applied to a network device and **characterized by** comprising:
a processing module, configured to, in a case that a Secondary Cell Group, SCG, or a Primary SCG Cell, PSCell, enters into a suspend state or a dormant state, ensure, via a signaling, an uplink bearer configured by configuration information of a bearer to transmit on a Master Cell Group, MCG;
wherein the processing module is configured to perform at least one of:
reconfiguring or releasing an SCG Radio Link Control, RLC, bearer via the signaling, to make to a terminal to have no SCG RLC bearer supporting uplink transmission;
deactivating a split bearer or de-configuring duplication transmission function of the split bearer, via the signaling;
setting a primary path of a split bearer to be the MCG, via the signaling; and
setting an uplink data split threshold of a split bearer to be infinity, via the signaling.

7. The processing equipment of configuration information of bearer according to claim 6, wherein the processing module is configured to perform at least one of:
releasing the SCG RLC bearer, via the signaling;
reconfiguring the SCG RLC bearer to be an MCG RLC bearer, via the signaling;
releasing the SCG RLC bearer supporting uplink transmission, via the signaling;
reconfiguring the SCG RLC bearer supporting uplink transmission to be an MCG RLC bearer, via the signaling; and
reconfiguring the SCG RLC bearer supporting uplink transmission to be only supporting downlink transmission, via the signaling.

8. The processing equipment of configuration information of bearer according to claim 6, wherein the processing module is further configured to perform:
when the SCG or the PSCell enters into an activated state, reconfiguring a configuration parameter of a split bearer, via the signaling.

9. A processing equipment of configuration information of bearer, applied to a terminal and **characterized by** comprising:
a processing module, configured to, in a case that a Secondary Cell Group, SCG, or a Primary SCG Cell, PSCell, enters into a suspend state or a dormant state, modify configuration information of a bearer, to ensure a configured uplink bearer to transmit on a Master Cell Group, MCG;
wherein the processing module is configured to perform at least one of: releasing an SCG Radio Link Control, RLC, bearer;
storing an SCG RLC bearer configuration information and suspending the SCG RLC bearer;
storing configuration information of a split bearer;
deactivating a split bearer or de-configuring duplication transmission function of the split bearer;
setting a primary path of a split bearer to be the MCG; and
the terminal setting an uplink data split threshold of a split bearer to be infinity.

10. The processing equipment of configuration information of bearer according to claim 9, the processing module is further configured to perform:
when the SCG or the PSCell enters into an activated state, recovering a configuration parameter of the split bearer, the configuration parameter being a configuration parameter when the SCG or the PSCell enters into the suspend state or the dormant state and configured by the network; or
when the SCG or the PSCell enters into an activated state, recovering a suspended SCG RLC bearer; or
when the SCG or the PSCell enters into an activated state, maintaining a configuration parameter of the bearer when the SCG or the PSCell enters into a suspend state or a dormant state.

11. A processor-readable storage medium, storing processor-executable instructions being configured to enable a processor to perform the method of any of one of claims 1 to 3.

12. A processor-readable storage medium, storing processor-executable instructions being configured to enable a processor to perform the method of claim 4 or 5.

## Patentansprüche

1. Verfahren zum Verarbeiten von Konfigurationsinformationen eines Trägers, das auf eine Netzwerkvorrichtung angewendet wird und
**dadurch gekennzeichnet ist, dass** es umfasst:
in einem Fall, dass eine Sekundärzellengruppe, SCG, oder eine Primär-SCG-Zelle, PSCell, in einen Sperrzustand oder einen Ruhezustand eintritt, Sicherstellen (21), durch die Netzwerkvorrichtung, über eine Signalisierung, dass ein Uplink-Träger, der durch Konfigurationsinformationen eines Trägers konfiguriert ist, auf einer Hauptzellengruppe, MCG, überträgt;
wobei das Sicherstellen, durch die Netzwerkvorrichtung, über die Signalisierung, dass ein Uplink-Träger, der durch Konfigurationsinformationen eines Trägers konfiguriert ist, auf einer MCG überträgt, mindestens eines umfasst von:
die Netzwerkvorrichtung rekonfiguriert oder gibt einen SCG-Funkverbindungssteuerungsträger, RLC-Träger, über die Signalisierung frei, um zu bewirken, dass ein Endgerät keinen SCG-RLC-Träger aufweist, der eine Uplink-Übertragung unterstützt;
die Netzwerkvorrichtung deaktiviert einen geteilten Träger oder dekonfiguriert eine Duplikationsübertragungsfunktion des geteilten Trägers über die Signalisierung;
die Netzwerkvorrichtung stellt einen Primärpfad eines geteilten Trägers als die MCG über die Signalisierung ein; und
die Netzwerkvorrichtung stellt eine Uplink-Datenteilungsschwelle eines geteilten Trägers über die Signalisierung auf unendlich ein.

2. Verfahren nach Anspruch 1, wobei das Rekonfigurieren oder Freigeben des SCG-RLC-Trägers durch die Netzwerkvorrichtung über die Signalisierung mindestens eines umfasst von:
die Netzwerkvorrichtung gibt den SCG-RLC-Träger über die Signalisierung frei;
die Netzwerkvorrichtung rekonfiguriert den SCG-RLC-Träger über die Signalisierung zu einem MCG-RLC-Träger;
die Netzwerkvorrichtung gibt den SCG-RLC-Träger, der die Uplink-Übertragung unterstützt, über die Signalisierung frei;
die Netzwerkvorrichtung rekonfiguriert den SCG-RLC-Träger, der die Uplink-Übertragung unterstützt, über die Signalisierung zu einem MCG-RLC-Träger; und
die Netzwerkvorrichtung rekonfiguriert den SCG-RLC-Träger, der die Uplink-Übertragung unterstützt, über die Signalisierung, um nur die Downlink-Übertragung zu unterstützen.

3. Verfahren nach Anspruch 1, ferner umfassend:
wenn die SCG oder die PSCell in einen aktivierten Zustand eintritt, rekonfiguriert die Netzwerkvorrichtung einen Konfigurationsparameter eines geteilten Trägers über die Signalisierung.

4. Verfahren zum Verarbeiten von Konfigurationsinformationen eines Trägers, das auf ein Endgerät angewendet wird und
**dadurch gekennzeichnet ist, dass** es umfasst:
in einem Fall, dass eine Sekundärzellengruppe, SCG, oder eine Primär-SCG-Zelle, PSCell, in einen Sperrzustand oder einen Ruhezustand eintritt, Modifizieren (31), durch das Endgerät, von Konfigurationsinformationen eines Trägers, um sicherzustellen, dass ein konfigurierter Uplink-Träger auf einer Hauptzellengruppe, MCG, überträgt,
wobei das Modifizieren, durch das Endgerät, der Konfigurationsinformationen des Trägers mindestens eines umfasst von:
das Endgerät gibt einen SCG-Funkverbindungssteuerungsträger, RLC-Träger, frei;
das Endgerät speichert eine SCG-RLC-Träger-Konfigurationsinformation und sperrt den SCG-RLC-Träger;
das Endgerät speichert Konfigurationsinformationen eines geteilten Trägers;
das Endgerät deaktiviert einen geteilten Träger oder dekonfiguriert die Duplikationsübertragungsfunktion des geteilten Trägers;
das Endgerät stellt einen Primärpfad eines geteilten Trägers als die MCG ein; und
das Endgerät stellt eine Uplink-Datenteilungsschwelle eines geteilten Trägers auf unendlich ein.

5. Verfahren nach Anspruch 4, ferner umfassend:
wenn die SCG oder die PSCell in einen aktivierten Zustand eintritt, stellt das Endgerät einen Konfigurationsparameter des geteilten Trägers wieder her, wobei der Konfigurationsparameter ein Konfigurationsparameter ist, wenn die SCG oder die PSCell in den Sperrzustand oder den Ruhezustand eintritt und durch das Netzwerk konfiguriert wird; oder
wenn die SCG oder die PSCell in einen aktivierten Zustand eintritt, stellt das Endgerät einen gesperrten SCG-RLC-Träger wieder her; oder
wenn die SCG oder die PSCell in einen aktivierten Zustand eintritt, erhält das Endgerät einen Konfigurationsparameter des Trägers aufrecht, wenn die SCG oder die PSCell in einen Sperrzustand oder einen Ruhezustand eintritt.

6. Ausrüstung zum Verarbeiten von Konfigurationsinformationen eines Trägers, die auf eine Netzwerkvorrichtung angewendet wird und
**dadurch gekennzeichnet ist, dass** sie umfasst:
ein Verarbeitungsmodul, das konfiguriert ist, um in einem Fall, dass eine Sekundärzellengruppe, SCG, oder eine Primär-SCG-Zelle, PSCell, einen Sperrzustand oder einen Ruhezustand eintritt, sicherzustellen, über eine Signalisierung, dass ein Uplink-Träger, der durch Konfigurationsinformationen eines Trägers konfiguriert ist, auf einer Hauptzellengruppe, MCG, überträgt;
wobei das Verarbeitungsmodul konfiguriert ist, um mindestens eines durchzuführen von:
Rekonfigurieren oder Freigeben eines SCG-Funkverbindungssteuerungsträgers, RLC-Träger über die Signalisierung, um zu bewirken, dass ein Endgerät keinen SCG-RLC-Träger aufweist, der eine Uplink-Übertragung unterstützt;
Deaktivieren eines geteilten Trägers oder Dekonfigurieren der Duplikationsübertragungsfunktion des geteilten Trägers über die Signalisierung;
Einstellen eines Primärpfads eines geteilten Trägers als die MCG über die Signalisierung; und
Einstellen einer Uplink-Datenteilungsschwelle eines geteilten Trägers auf unendlich über die Signalisierung.

7. Ausrüstung zum Verarbeiten von Konfigurationsinformationen des Trägers nach Anspruch 6, wobei das Verarbeitungsmodul konfiguriert ist, um mindestens eines durchzuführen von:
Freigeben des SCG-RLC-Trägers über die Signalisierung;
Rekonfigurieren des SCG-RLC-Trägers zu einem MCG-RLC-Träger über die Signalisierung; Freigeben des SCG-RLC-Trägers, der die Uplink-Übertragung unterstützt, über die Signalisierung;
Rekonfigurieren des SCG-RLC-Trägers, der Uplink-Übertragung unterstützt, zu einem MCG-RLC-Träger über die Signalisierung; und
Rekonfigurieren des SCG-RLC-Trägers, der Uplink-Übertragung unterstützt, um nur Downlink-Übertragung zu unterstützen, über die Signalisierung.

8. Ausrüstung zum Verarbeiten von Konfigurationsinformationen des Trägers nach Anspruch 6, wobei das Verarbeitungsmodul ferner konfiguriert ist, um durchzuführen:
wenn die SCG oder die PSCell in einen aktivierten Zustand eintritt, Rekonfigurieren eines Konfigurationsparameters eines geteilten Trägers über die Signalisierung.

9. Ausrüstung zum Verarbeiten von Konfigurationsinformationen eines Trägers, das auf ein Endgerät angewendet wird und
**dadurch gekennzeichnet ist, dass** es umfasst:
ein Verarbeitungsmodul, das konfiguriert ist, um in einem Fall, dass eine Sekundärzellengruppe, SCG, oder eine Primär-SCG-Zelle, PSCell, in einen Sperrzustand oder einen Ruhezustand eintritt, Modifizieren von Konfigurationsinformationen eines Trägers, um sicherzustellen, dass ein konfigurierter Uplink-Träger auf einer Hauptzellengruppe, MCG, überträgt;
wobei das Verarbeitungsmodul konfiguriert ist, um mindestens eines durchzuführen von: Freigeben eines SCG-Funkverbindungssteuerungsträgers, RLC-Trägers;
Speichern einer SCG-RLC-Trägerkonfigurationsinformation und Sperren des SCG-RLC-Trägers;
Speichern von Konfigurationsinformationen eines geteilten Trägers;
Deaktivieren eines geteilten Trägers oder Dekonfigurieren der Duplikationsübertragungsfunktion des geteilten Trägers;
Einstellen eines Primärpfads eines geteilten Trägers als die MCG; und
das Endgerät stellt eine Uplink-Datenteilungsschwelle eines geteilten Trägers auf unendlich ein.

10. Ausrüstung zum Verarbeiten von Konfigurationsinformationen von Träger nach Anspruch 9, wobei das Verarbeitungsmodul ferner konfiguriert ist, um durchzuführen:
wenn die SCG oder die PSCell in einen aktivierten Zustand eintritt, Wiederherstellen eines Konfigurationsparameters des geteilten Trägers, wobei der Konfigurationsparameter ein Konfigurationsparameter ist, wenn die SCG oder die PSCell in den Sperrzustand oder den Ruhezustand eintritt und durch das Netzwerk konfiguriert wird; oder
wenn die SCG oder die PSCell in einen aktivierten Zustand eintritt, Wiederherstellen eines gesperrten SCG-RLC-Trägers; oder
wenn die SCG oder die PSCell in einen aktivierten Zustand eintritt, Aufrechterhalten eines Konfigurationsparameters des Trägers, wenn die SCG oder die PSCell in einen Sperrzustand oder einen Ruhezustand eintritt.

11. Prozessorlesbares Speichermedium, das prozessorausführbare Anweisungen speichert, die konfiguriert sind, um einen Prozessor zu befähigen, das Verfahren nach einem der Ansprüche 1 bis 3 durchzuführen.

12. Prozessorlesbares Speichermedium, das prozessorausführbare Anweisungen speichert, die konfiguriert sind, um einen Prozessor zu befähigen, das Verfahren nach Anspruch 4 oder 5 durchzuführen.

## Revendications

1. Procédé de traitement d'informations de configuration d'une porteuse, appliqué à un dispositif de réseau et **caractérisé par le fait qu'**il comprend :
dans le cas où un groupe de cellules secondaires, SCG, ou une cellule SCG primaire, PSCell, entre dans un état de suspension ou un état dormant, le fait de garantir (21), par le dispositif de réseau, par l'intermédiaire d'une signalisation, une porteuse de liaison montante configurée par des informations de configuration d'une porteuse à transmettre sur un groupe de cellules maîtresses, MCG ;
dans lequel le fait de garantir, par le dispositif de réseau, par l'intermédiaire de la signalisation, une porteuse de liaison montante configurée par des informations de configuration d'une porteuse à transmettre sur un MCG comprend au moins l'un parmi :
le dispositif de réseau reconfigurant ou libérant une porteuse de commande de liaison radio, RLC, SCG par l'intermédiaire de la signalisation, de manière à amener un terminal à ne disposer d'aucune porteuse RLC SCG prenant en charge une transmission de liaison montante ;
le dispositif de réseau désactivant une porteuse scindée ou déconfigurant une fonction de transmission de duplication de la porteuse scindée, par l'intermédiaire de la signalisation ;
le dispositif de réseau définissant une trajectoire primaire d'une porteuse scindée pour être le MCG, par l'intermédiaire de la signalisation ; et
le dispositif de réseau définissant un seuil de scission de données de liaison montante d'une porteuse scindée pour qu'il soit infini, par l'intermédiaire de la signalisation.

2. Procédé selon la revendication 1, dans lequel la reconfiguration ou la libération, par le dispositif de réseau, de la porteuse RLC SCG par l'intermédiaire de la signalisation comprend au moins l'un parmi :
le dispositif de réseau libérant la porteuse RLC SCG, par l'intermédiaire de la signalisation ;
le dispositif réseau reconfigurant la porteuse RLC SCG pour qu'elle soit une porteuse RLC MCG, par l'intermédiaire de la signalisation ;
le dispositif de réseau libérant la porteuse RLC SCG prenant en charge une transmission de liaison montante, par l'intermédiaire de la signalisation ;
le dispositif de réseau reconfigurant la porteuse RLC SCG prenant en charge une transmission de liaison montante pour qu'elle soit une porteuse RLC MCG, par l'intermédiaire de la signalisation ; et
le dispositif réseau reconfigurant la porteuse RLC SCG prenant en charge une transmission de liaison montante pour qu'elle prenne uniquement en charge une transmission de liaison descendante, par l'intermédiaire de la signalisation.

3. Procédé selon la revendication 1, comprenant en outre :
lorsque le SCG ou la PSCell entre dans un état activé, le dispositif de réseau reconfigurant un paramètre de configuration d'une porteuse scindée, par l'intermédiaire de la signalisation.

4. Procédé de traitement d'informations de configuration d'une porteuse, appliqué à un terminal et **caractérisé par le fait qu'**il comprend :
dans le cas où un groupe de cellules secondaires, SCG, ou une cellule SCG primaire, PSCell, entre dans un état de suspension ou un état dormant, la modification (31), par le terminal, d'informations de configuration d'une porteuse, pour garantir une porteuse de liaison montante configurée à transmettre sur un groupe de cellules maîtresses, MCG,
dans lequel la modification, par le terminal, d'informations de configuration de la porteuse comprend au moins l'un parmi :
le terminal libérant une porteuse de commande de liaison radio, RLC, SCG ;
le terminal stockant des informations de configuration de porteuse RLC SCG et suspendant la porteuse RLC SCG ;
le terminal stockant des informations de configuration d'une porteuse scindée ;
le terminal désactivant une porteuse scindée ou déconfigurant une fonction de transmission de duplication de la porteuse scindée ;
le terminal définissant une trajectoire primaire d'une porteuse scindée pour être le MCG ; et
le terminal définissant un seuil de scission de données de liaison montante d'une porteuse scindée pour qu'il soit infini.

5. Procédé selon la revendication 4, comprenant en outre :
lorsque le SCG ou la PSCell entre dans un état activé, le terminal récupérant un paramètre de configuration de la porteuse scindée, le paramètre de configuration étant un paramètre de configuration lorsque le SCG ou la PSCell entre dans l'état de suspension ou l'état dormant et configuré par le réseau ; ou
lorsque le SCG ou la PSCell entre dans un état activé, le terminal récupérant une porteuse RLC SCG suspendue ; ou
lorsque le SCG ou la PSCell entre dans un état activé, le terminal maintenant un paramètre de configuration de la porteuse lorsque le SCG ou la PSCell entre dans un état de suspension ou un état dormant.

6. Équipement de traitement d'informations de configuration de porteuse, appliqué à un dispositif de réseau et **caractérisé par le fait qu'**il comprend :
un module de traitement, configuré pour, dans le cas où un groupe de cellules secondaires, SCG, ou une cellule SCG primaire, PSCell, entre dans un état de suspension ou un état dormant, garantir, par l'intermédiaire d'une signalisation, une porteuse de liaison montante configurée par des informations de configuration d'une porteuse à transmettre sur un groupe de cellules maîtresses, MCG ;
dans lequel le module de traitement est configuré pour réaliser au moins l'une parmi :
la reconfiguration ou la libération d'une porteuse de commande de liaison radio, RLC, SCG, par l'intermédiaire de la signalisation, de manière à amener un terminal à ne disposer d'aucune porteuse RLC SCG prenant en charge une transmission de liaison montante ;
la désactivation d'une porteuse scindée ou la déconfiguration d'une fonction de transmission de duplication de la porteuse scindée, par l'intermédiaire de la signalisation ;
la définition d'une trajectoire primaire d'une porteuse scindée pour être le MCG, par l'intermédiaire de la signalisation ; et
la définition d'un seuil de scission de données de liaison montante d'une porteuse scindée pour qu'il soit l'infini, par l'intermédiaire de la signalisation.

7. Équipement de traitement d'informations de configuration de porteuse selon la revendication 6, dans lequel le module de traitement est configuré pour réaliser au moins l'une parmi :
la libération de la porteuse RLC SCG, par l'intermédiaire de la signalisation ;
la reconfiguration de la porteuse RLC SCG pour qu'elle soit une porteuse RLC MCG, par l'intermédiaire de la signalisation ; la libération de la porteuse RLC SCG prenant en charge une transmission de liaison montante, par l'intermédiaire de la signalisation ;
la reconfiguration de la porteuse RLC SCG prenant en charge une transmission de liaison montante pour qu'elle soit une porteuse RLC MCG, par l'intermédiaire de la signalisation ; et
la reconfiguration de la porteuse RLC SCG prenant en charge une transmission de liaison montante pour qu'elle prenne uniquement en charge une transmission de liaison descendante, par l'intermédiaire de la signalisation.

8. Équipement de traitement d'informations de configuration de porteuse selon la revendication 6, dans lequel le module de traitement est en outre configuré pour réaliser :
lorsque le SCG ou la PSCell entre dans un état activé, la reconfiguration d'un paramètre de configuration d'une porteuse scindée, par l'intermédiaire de la signalisation.

9. Equipement de traitement d'informations de configuration de porteuse, appliqué à un terminal et **caractérisé par le fait qu'**il comprend :
un module de traitement, configuré pour, dans le cas où un groupe de cellules secondaires, SCG, ou une cellule SCG primaire, PSCell, entre dans un état de suspension ou un état dormant, modifier des informations de configuration d'une porteuse, pour garantir une porteuse de liaison montante configurée à transmettre sur un groupe de cellules maîtresses, MCG ;
dans lequel le module de traitement est configuré pour réaliser au moins l'un parmi : la libération d'une porteuse de commande de liaison radio, RLC, SCG ;
le stockage d'informations de configuration de porteuse RLC SCG et la suspension de la porteuse RLC SCG ;
le stockage d'informations de configuration d'une porteuse scindée ;
la désactivation d'une porteuse scindée ou la déconfiguration d'une fonction de transmission de duplication de la porteuse scindée ;
la définition d'une trajectoire primaire d'une porteuse scindée pour être le MCG ; et
le terminal définissant un seuil de scission de données de liaison montante d'une porteuse scindée pour qu'il soit infini.

10. Équipement de traitement d'informations de configuration de porteuse selon la revendication 9, le module de traitement est en outre configuré pour réaliser :
lorsque le SCG ou la PSCell entre dans un état activé, la récupération d'un paramètre de configuration de la porteuse scindée, le paramètre de configuration étant un paramètre de configuration lorsque le SCG ou la PSCell entre dans l'état de suspension ou l'état dormant et configuré par le réseau ; ou
lorsque le SCG ou la PSCell entre dans un état activé, la récupération d'une porteuse RLC SCG suspendue ; ou
lorsque le SCG ou la PSCell entre dans un état activé, le maintien d'un paramètre de configuration de la porteuse lorsque le SCG ou la PSCell entre dans un état de suspension ou un état dormant.

11. Support de stockage lisible par un processeur, stockant des instructions exécutables par un processeur configuré pour permettre à un processeur de réaliser le procédé selon l'une quelconque des revendications 1 à 3.

12. Support de stockage lisible par un processeur, stockant des instructions exécutables par un processeur configuré pour permettre à un processeur de réaliser le procédé selon la revendication 4 ou 5.
